# EUROPEAN PATENT SPECIFICATION

(11) **EP 4 072 285 B1**
(45) Date of publication and mention of the grant of the patent: **25.11.2026**
(21) Application number: 20900532.1
(22) Date of filing: 10.12.2020
(51) Int. Cl.: A01K 63/00, A01K 63/06, F21V 11/02, F21V 21/30

(54) **LIGHT SYSTEM FOR AQUARIUM AND METHODS**
LICHTSYSTEM FÜR AQUARIUM UND VERFAHREN
SYSTÈME D'ÉCLAIRAGE POUR AQUARIUM ET PROCÉDÉS

(30) Priority: 13.12.2019 US 201962948017 P
(43) Date of publication of application: 19.10.2022
(73) Proprietor: Spectrum Brands, Inc., Middleton, WI 53562 (US)
(72) Inventor: BRAUERS, Thomas, Middleton, Wisconsin 53562 (US); WALLMEIER, Bernd, Middleton, Wisconsin 53562 (US)
(74) Representative: Zimmermann & Partner Patentanwälte mbB
(86) International application number: PCT/US2020/064199
(87) International publication number: WO 2021/119248

(56) References cited:
- CN-A- 102 232 366
- CN-A- 105 010 225
- JP-A- H08 298 896
- JP-U- H0 580 257
- KR-A- 19990 025 754
- KR-B1- 100 702 681
- KR-B1- 100 866 395
- US-A1- 2007 051 321

## Description

### Technical Field

This disclosure relates to a light system comprising an aquarium tank and to a method of providing lighting into an interior of an aquarium.

### Background

Many aquariums have lids with lighting under the lid. To maintain the aquarium, the lid needs to be opened, so that the interior of the aquarium can be accessed. In typical prior art aquarium lighting systems, the light is secure to the aquarium lid, so that when the aquarium lid is pivoted open, the light pivots with the lid and shines in the eyes of the person servicing the aquarium. In many cases, the light is perceived as disturbing and is switched off.

For the illumination of the aquarium during maintenance and care work, an external light source is often provided. This is not only costly, but can also bring danger. If the external light falls accidentally into the aquarium water and does not have safety features, there is a risk of electrical shock.
Document CN 102 232 366 A relates to a covering device for aquariums and breeding tanks.
Document JP H08 298896 A relates to an aquarium fish tank used for breeding ornamental fish, and to a lid member with a lighting device that is mounted on the upper part of the aquarium body.
Document JP H05 80257 U relates to an aquarium tank and a lid with a light source.

Therefore, there is a need for an improvement in aquarium lighting, which allows lighting into the aquarium interior during servicing when the lid is pivoted open, and which avoids the dangers of external lighting, such as electrical shock.

### Summary

A light system according to the invention is disclosed in claim 1. A method of providing lighting into an interior of an aquarium by such a system is disclosed in claim 6. Preferred embodiments are disclosed in the dependent claims.

In general, a light system includes an aquarium tank and a lid covering the open top of the tank. The tank has a surrounding wall defining an interior volume and an open top in communication with the interior volume. The lid is pivotably attached to the tank and is pivotable between a covered position and uncovered position. The lid has an interior portion in communication with the interior volume, when the lid is in the covered position. A light source is secured to the interior portion of the lid and moves with the lid between the covered position and uncovered position. The light source emits a light beam. An alignment arrangement is provided for the light source and is constructed and arranged to ensure the light beam projects into the tank interior volume regardless of the position of the lid and light source.

In an alternative according to the invention, the alignment arrangement includes a pivotable shield secured to the interior portion of the lid and moving with the lid between the covered position and uncovered position. The shield pivots by gravity to a position deflecting the light beam into the tank interior, when the lid is moved to the uncovered position.

The alignment arrangement can include a pair of swivel joints extending between the lid and opposite ends of the shield.

The light source can be a florescent light bulb fixed at opposite ends.

In another alternative according to the invention, the alignment arrangement includes a pair of articulated joints between the lid and the light source, wherein the articulated joints permit the light source to pivot with gravity to project the light beam continuously into the tank interior, when the lid is moved between the covered position and uncovered position.

The light source can be a florescent light bulb fixed at opposite ends to the articulated joints.

In another alternative according to the invention, the alignment arrangement includes a pulley system to rotate the light source when the lid is moved between the covered position and uncovered position.

The lid is connected to the tank along a hinge joint, and the pulley system includes a belt-pulley system having a first wheel connected to the hinge joint, and a second wheel connected to the light source, and a belt around each of the first wheel and second wheel. When the lid is moved along the hinge joint between the covered position and the uncovered position, the first wheel rotates and translates motion to the belt causing the second wheel to rotate and rotate the light source.

In example arrangements, the light source is a florescent light bulb secured at opposite ends to the pulley system.

In another aspect, a method of providing lighting into an interior of an aquarium of provided. The aquarium includes a tank having a surrounding wall defining an interior volume; an open top in communication with the interior volume; a lid pivotably covering the open top of the tank; and a light source secured to the interior portion of the lid and moving with the lid. The method includes a step of pivoting the lid from a position covering the tank to a position exposing the open top of the tank. The method further includes a step of using an alignment arrangement for the light source to ensure a light beam from the light source projects into the tank interior volume regardless of the position of the lid and light source.

Other aspects of this disclosure will become apparent by consideration of the detailed description and accompanying drawings.

### Brief Description of the Drawings

FIG. 1 is a perspective view of an aquarium having a light system, constructed in accordance with principles of this disclosure;
FIG. 2 is a side view of a first embodiment of a lid assembly having a light system, constructed in accordance with principles of this disclosure;
FIG. 3 is a side view of the lid assembly of FIG. 2, but pivoted to be in the uncovered position;
FIG. 4 is a perspective view of the lid assembly of FIG. 3 in the uncovered position;
FIG. 5 is a perspective view of a portion of the lid assembly of FIGS. 2-4, with the lid removed to reveal components on the underside of the lid;
FIG. 6 is an enlarged view of a portion of FIG. 5;
FIG. 7 is a perspective view of a second embodiment of the lid assembly for use in an aquarium, in which the lid is in the covered position;
FIG. 8 is a perspective view of an enlarged portion of the lid assembly of FIG. 7;
FIG. 9 is a perspective view of the lid assembly of FIG. 7, but with the lid pivoted into an uncovered position;
FIG. 10 is a perspective view of an enlarged portion of FIG. 9;
FIG. 11 is a perspective view of a third embodiment of a lid assembly used with the aquarium, the lid being in a covered position;
FIG. 12 is a perspective view of the lid assembly of FIG. 11 and with the lid partially pivoted into an uncovered position;
FIG. 13 is a perspective view of the lid assembly of FIG. 11 and with the lid pivoted into the uncovered position; and
FIG. 14 is an enlarged perspective view of a portion of the lid assembly of FIG. 11.

### Detailed Description

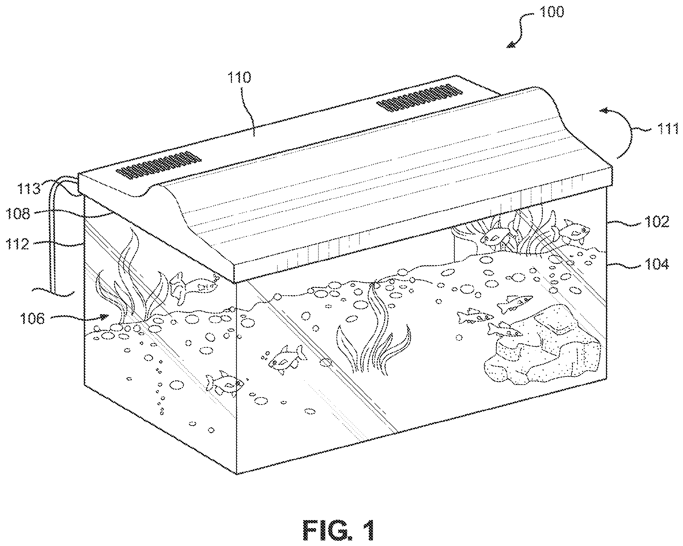

FIG. 1 illustrates an aquarium 100. The aquarium 100 includes a tank 102 having a surrounding wall 104 defining an interior volume 106. Within the interior volume 106 is typically water, although the tank 102 can be for sustaining non-aquatic habitats, as well.

Along the upper portion of the surrounding wall 104 is an open top 108 in communication with the interior volume 106.

A lid assembly 110 assembly is illustrated covering the open top 108 of the tank 102. The lid assembly 110 includes a frame 50 secured to the free terminal end of the top of the surrounding wall 104 and a lid 52 in pivotable relation to the frame 50. The frame 50 is typically secured to the tank wall 104, and the lid 52 is removable, such that the interior volume 106 of the tank 102 can be accessed. In many example systems, the lid assembly 110 is oriented relative to the tank wall such that the lid 52 pivots relative to the frame 50 adjacent a rear wall 112 of the tank wall 104 at a pivot connection 113. The pivot connection 113 can be with hinges other suitable attachments. The lid 52 can be pivotable between the covered position as shown in FIG. 1 and an uncovered position, in which the lid 52 is pivoted along arrow 111 about the pivot connection 113 so that the interior volume 106 can be accessed through the top 108.

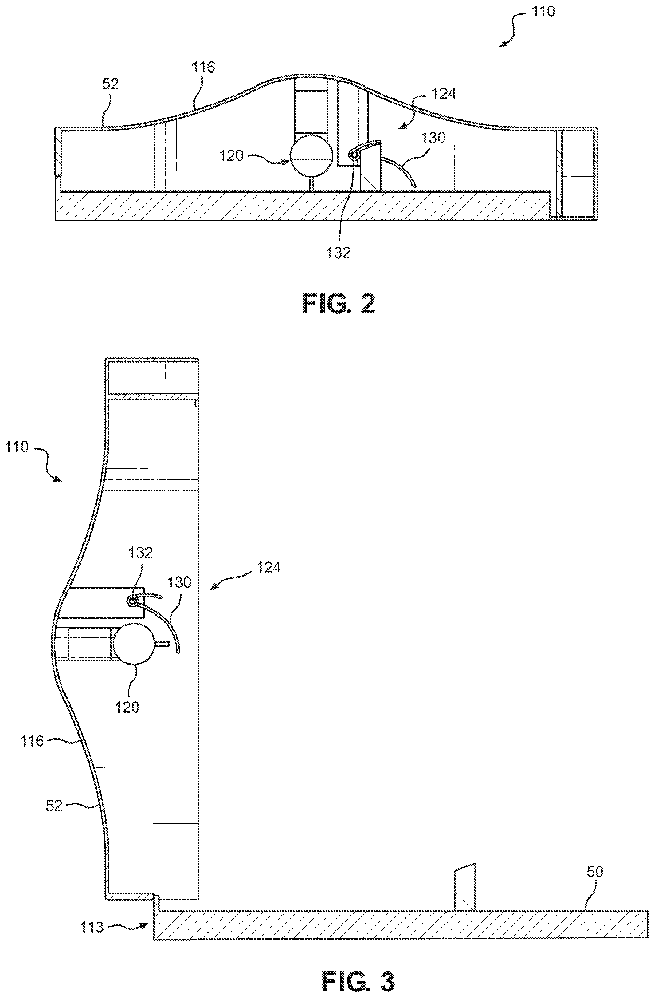

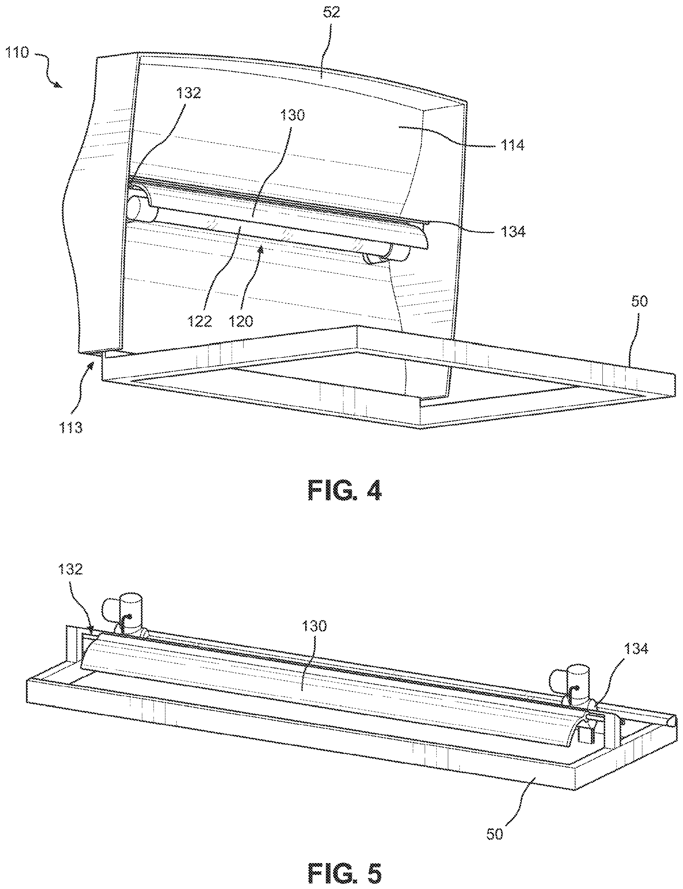

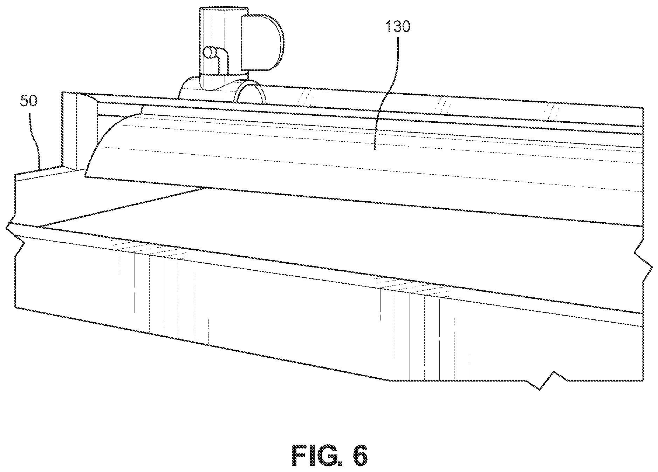

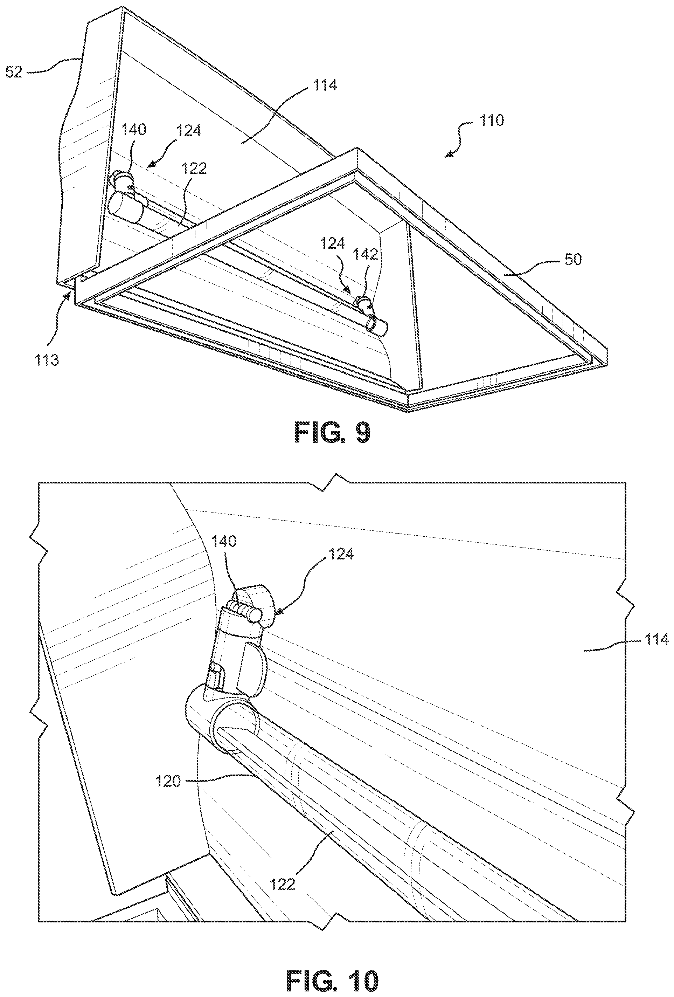

In reference now to FIGS. 2-14, the lid 52 has an interior portion 114 that is in communication with the interior volume 106, when the lid 52 is in the covered position. Opposite of the interior portion 114 is an exterior portion 116.

The lid assembly 110 has a light source 120. The light source 120 can be secured to the interior portion 114 and moved with the lid 52 between the covered position and uncovered position. The light source 120 emits a light beam. In many typical systems, the light source 120 is a florescent light bulb 122 fixed to the interior portion 114 of the lid 52 at opposite ends.

In accordance with principles of this disclosure, the light system includes an alignment arrangement 124. The alignment arrangement 124 is for the light source 120 and is constructed and arranged to ensure that the light beam projects into the tank interior volume 106 regardless of the position of the lid 52 and light source 120. This will provide the advantage of having light into the interior volume 106, while servicing the aquarium 106 with the lid 52 pivoted into the uncovered position while avoiding having the light beam shine directly into the eyes of the person servicing the aquarium 100.

In reference now to the embodiment of FIGS. 2-6, a first embodiment of the alignment arrangement 124 is illustrated. In this embodiment, the alignment arrangement 124 includes a pivotable shield 130. The shield 130 is secured to the interior portion 114 of the lid 52 and moves with the lid 52 between the covered position and uncovered position. The shield 130 pivots by gravity to a position deflecting the light beam into the tank interior volume 106, when the lid 52 is moved to the uncovered position.

The alignment arrangement 124 includes a pair of swivel joints 132, 134, at opposite ends of the light bulb 122. The swivel joints 132, 134 extend between the lid 52 and opposite ends of the shield 130. As can be seen by comparing FIGS. 2 and 3, the shield 130 swivels or rotates with gravity about the swivel joints 132, 134 when the lid 52 pivots between the covered position of FIG. 2 and the uncovered position of FIG. 3. In this way, the light beam is always projecting into the interior of the tank 102 and prevented from shining into the eyes of the person servicing the aquarium 100.

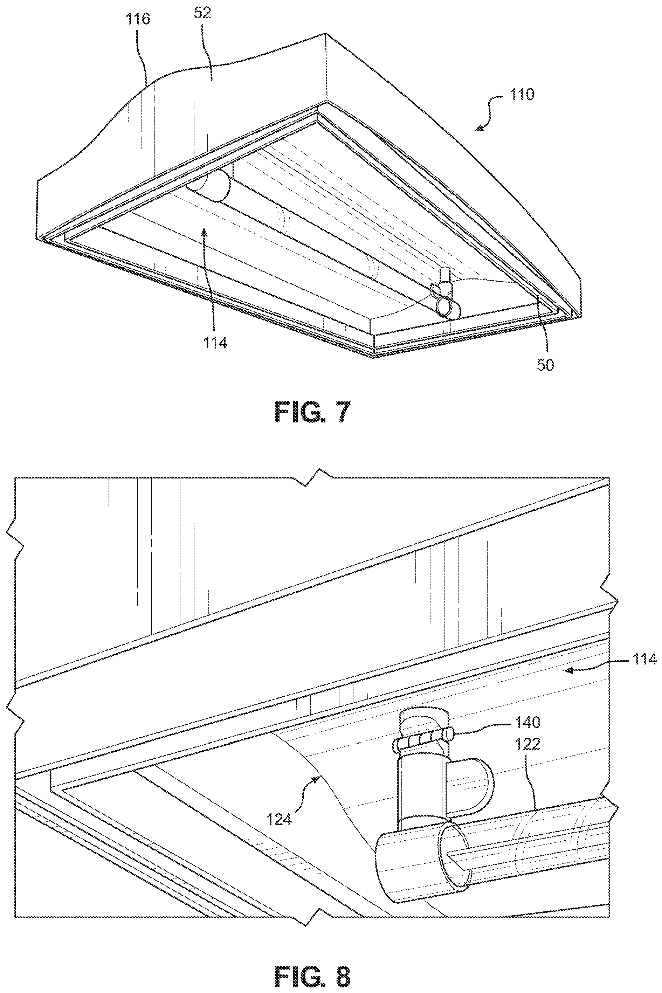

In reference now to FIGS. 7-10, a second embodiment of the alignment arrangement 124 is illustrated. In this embodiment, the alignment arrangement 124 includes a pair of articulated joints 140, 142 between the lid 52 and the light source 120. The articulated joints, 140, 142 permit the light source 120 to pivot with gravity to project the light beam continuously into the tank interior volume 106, when the lid 52 is moved between the covered position and uncovered position.

The light source 120 is typically a florescent light bulb 122, fixed at opposite ends to the articulated joints 140.

It can be seen by comparing FIG. 8 to FIG. 10 how the light bulb 122 pivots by gravity such that: (i) when the lid 52 is in the covered position, the light beam is directed into the tank interior volume 106; and (ii) when the lid 52 is in the uncovered position, the light bulb 122 pivots along the articulated joints 140, 142 so that the light source 120 is still directed into the interior volume 106 due to rotating about the articulated joints 140, 142.

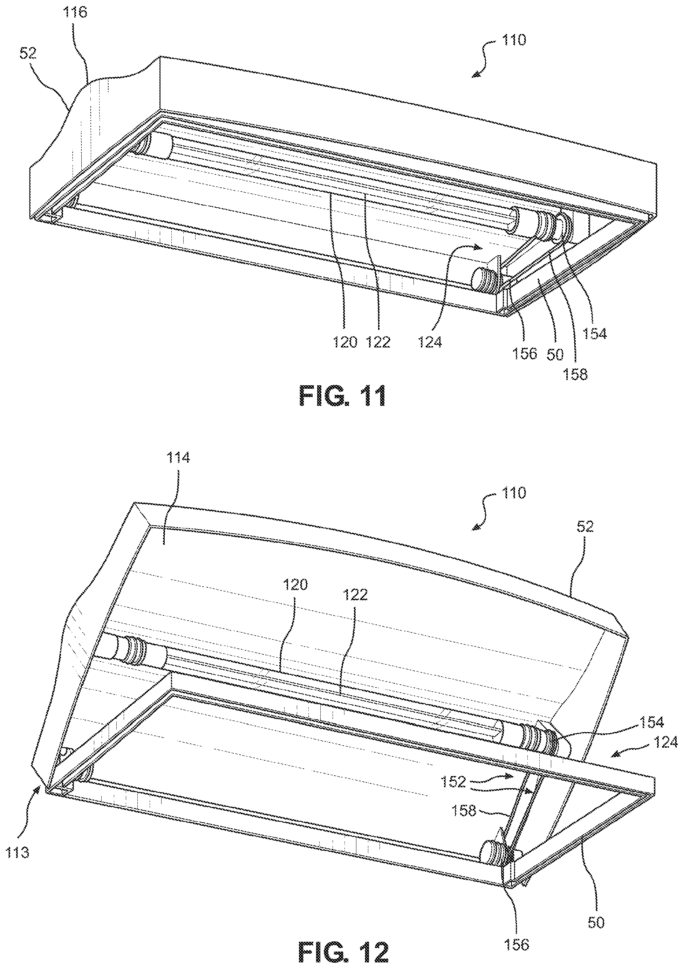

In reference now to FIGS. 11-14, a third embodiment of the alignment arrangement 124 is illustrated.

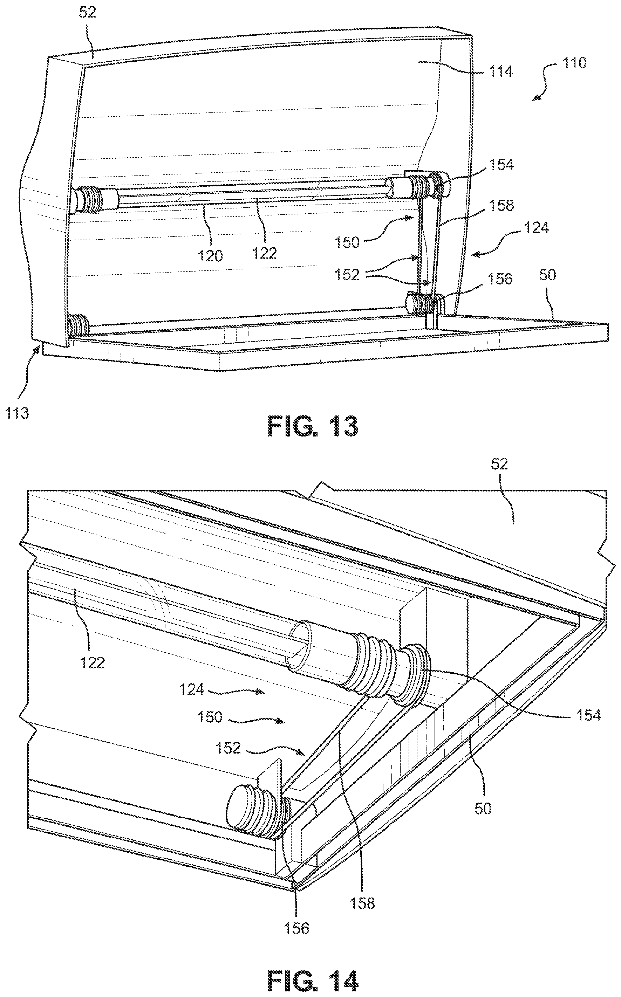

In the embodiment of FIGS. 11-14, the alignment arrangement 124 includes a pulley system 150 (FIG. 13). The pulley system 150 can be used to rotate the light source 120 when the lid 52 is moved between the covered position and uncovered position.

Many embodiments are possible. In the example shown, the pulley system 150 includes a belt-pulley system 152 having at least: a first wheel 154 connected to the hinge joint 113; a second wheel 156 connected to the light source 120; and a belt 158 connected to the hinge joint 113. The belt 158 is around each of the first wheel 154 and second wheel 156.

In variations, the belt-pulley system 152 can also include a pair of first wheels at opposite ends of the light source 120; a pair of second wheels at opposite ends of the hinge joint 113; and a pair of belts connecting the first and second wheels.

When the lid 52 is moved along the hinge joint 113 between the covered position and uncovered position, the first wheels 154, 160 rotate and translate motion to the belts 158, 164, causing the second wheels 156, 162 to rotate and rotate the light source 120. In this manner, the light beam projects into the tank interior 106, regardless of the position of the lid 52. In this embodiment, the light source 120 is also florescent lightbulb 122 secured at opposite ends to the pulley system 150.

These systems can be used in a method of providing lighting into the interior volume 106 of the aquarium 100. The method includes pivoting the lid 52 from a position covering the tank 102 to a position exposing the top 108 of the tank 102. The method includes using the alignment arrangement 124 to ensure that the light beam from the light source 120 projects into the tank interior volume 106 regardless of the position of the lid 52 and light source 120.

The above represents example principles. Many embodiments can be made using these principles within the scope of the appended claims.

## Claims

1. A light system comprising:
(a) an aquarium tank having a surrounding wall (104) defining an interior volume (106); an open top (108) in communication with the interior volume;
(b) a lid (52) covering the open top of the tank; the lid being pivotably attached to the tank and being pivotable between a covered position and uncovered position; the lid having an interior portion (114) in communication with the interior volume, when the lid is in the covered position;
(c) a light source (120) secured to the interior portion of the lid and moving with the lid between the covered position and uncovered position; the light source emitting a light beam; and
(d) an alignment arrangement (124) for the light source constructed and arranged to ensure the light beam projects into the tank interior volume regardless of the position of the lid and light source, wherein the alignment arrangement additionally includes one of the following:
a pivotable shield (130) secured to the interior portion of the lid and moving with the lid between the covered position and uncovered position; the shield pivoting by gravity to a position deflecting the light beam into the tank interior, when the lid is moved to the uncovered position; or
a pair of articulated joints (140, 142) between the lid and the light source; wherein the articulated joints permit the light source to pivot with gravity to project the light beam continuously into the tank interior volume, when the lid is moved between the covered position and uncovered position; or
a pulley system (150) to rotate the light source when the lid is moved between the covered position and uncovered position, and wherein:
(a) the lid is connected to the tank along a hinge joint (113);
(b) the pulley system includes a belt-pulley system (152) having a first wheel (154) connected to the hinge joint, and a second wheel (156) connected to the light source, and a belt (158) around each of the first wheel and second wheel; wherein when the lid is moved along the hinge joint between the covered position and the uncovered position, the first wheel rotates and translates motion to the belt causing the second wheel to rotate and rotate the light source.

2. The system of claim 1 wherein the alignment arrangement includes the pivotable shield (130) secured to the interior portion of the lid and moving with the lid between the covered position and uncovered position, and wherein the alignment arrangement includes a pair of swivel joints (132, 134) extending between the lid and opposite ends of the shield.

3. The system of claim 2 wherein the light source is a fluorescent light bulb fixed at opposite ends.

4. The system of claim 1 wherein the alignment arrangement includes the pair of articulated joints (140, 142) between the lid and the light source, and wherein the light source is a fluorescent light bulb fixed at opposite ends to the articulated joints.

5. The system of claim 1 wherein the alignment arrangement includes the pulley system (150) and wherein the light source is a fluorescent light bulb secured at opposite ends to the pulley system.

6. A method of providing lighting into an interior of an aquarium by the system of any of claims 1 - 5; the method comprising:
(a) pivoting the lid from a position covering the tank to a position exposing the open top of the tank; and
(b) using the alignment arrangement for the light source to ensure the light beam from the light source projects into the tank interior volume regardless of the position of the lid and light source.

## Patentansprüche

1. Lichtsystem, umfassend:
(a) ein Aquariumbecken mit einer umgebenden Wand (104), die ein Innenvolumen (106) definiert;
eine offene Oberseite (108) in Verbindung mit dem Innenvolumen;
(b) einen Deckel (52), der die offene Oberseite des Beckens abdeckt; wobei der Deckel schwenkbar an dem Becken angebracht ist und zwischen einer abgedeckten Position und einer nicht abgedeckten Position schwenkbar ist; wobei der Deckel einen Innenabschnitt (114) in Verbindung mit dem Innenvolumen aufweist, wenn sich der Deckel in der abgedeckten Position befindet;
(c) eine Lichtquelle (120), die an dem Innenabschnitt des Deckels befestigt ist und sich mit dem Deckel zwischen der abgedeckten Position und der nicht abgedeckten Position bewegt; wobei die Lichtquelle einen Lichtstrahl emittiert; und
(d) eine Ausrichtungsanordnung (124) für die Lichtquelle, die so konstruiert und angeordnet ist, dass sichergestellt ist, dass der Lichtstrahl in das Beckeninnenvolumen projiziert wird, unabhängig von der Position des Deckels und der Lichtquelle, wobei die Ausrichtungsanordnung zusätzlich eines von Folgenden umfasst:
eine schwenkbare Abschirmung (130), die an dem Innenabschnitt des Deckels befestigt ist und sich mit dem Deckel zwischen der abgedeckten Position und der nicht abgedeckten Position bewegt; wobei die Abschirmung durch die Schwerkraft in eine Position schwenkt, die den Lichtstrahl in das Beckeninnere ablenkt, wenn der Deckel in die nicht abgedeckte Position bewegt wird; oder
ein Paar Gelenkverbindungen (140, 142) zwischen dem Deckel und der Lichtquelle; wobei die Gelenkverbindungen es der Lichtquelle ermöglichen, durch die Schwerkraft zu schwenken, um den Lichtstrahl kontinuierlich in das Beckeninnenvolumen zu projizieren, wenn der Deckel zwischen der abgedeckten Position und der nicht abgedeckten Position bewegt wird; oder
ein Riemenscheibensystem (150) zum Drehen der Lichtquelle, wenn der Deckel zwischen der abgedeckten Position und der nicht abgedeckten Position bewegt wird, und wobei:
(a) der Deckel entlang einer Scharnierverbindung (113) mit dem Becken verbunden ist;
(b) das Riemenscheibensystem ein Riemengetriebe-System (152) mit einem ersten Rad (154), das mit der Scharnierverbindung verbunden ist, und einem zweiten Rad (156), das mit der Lichtquelle verbunden ist, und einem Riemen (158) um jedes von dem ersten Rad und dem zweiten Rad aufweist; wobei, wenn der Deckel entlang der Scharnierverbindung zwischen der abgedeckten Position und der nicht abgedeckten Position bewegt wird, sich das erste Rad dreht und die Bewegung auf den Riemen überträgt, was bewirkt, dass sich das zweite Rad dreht und die Lichtquelle dreht.

2. System nach Anspruch 1, wobei die Ausrichtungsanordnung die schwenkbare Abschirmung (130) umfasst, die an dem Innenabschnitt des Deckels befestigt ist und sich mit dem Deckel zwischen der abgedeckten Position und der nicht abgedeckten Position bewegt, und wobei die Ausrichtungsanordnung ein Paar Drehgelenke (132, 134) umfasst, die sich zwischen dem Deckel und gegenüberliegenden Enden der Abschirmung erstrecken.

3. System nach Anspruch 2, wobei die Lichtquelle eine Leuchtstofflampe ist, die an gegenüberliegenden Enden fixiert ist.

4. System nach Anspruch 1, wobei die Ausrichtungsanordnung das Paar Gelenkverbindungen (140, 142) zwischen dem Deckel und der Lichtquelle umfasst, und wobei die Lichtquelle eine Leuchtstofflampe ist, die an gegenüberliegenden Enden an den Gelenkverbindungen fixiert ist.

5. System nach Anspruch 1, wobei die Ausrichtungsanordnung das Riemenscheibensystem (150) umfasst und wobei die Lichtquelle eine Leuchtstofflampe ist, die an gegenüberliegenden Enden an dem Riemenscheibensystem befestigt ist.

6. Verfahren zum Bereitstellen von Beleuchtung in ein Inneres eines Aquariums durch das System nach einem der Ansprüche 1 bis 5; wobei das Verfahren umfasst:
(a) Schwenken des Deckels von einer Position, die das Becken abdeckt, in eine Position, die die offene Oberseite des Beckens freilegt; und
(b) Verwenden der Ausrichtungsanordnung für die Lichtquelle, um sicherzustellen, dass der Lichtstrahl von der Lichtquelle unabhängig von der Position des Deckels und der Lichtquelle in das Beckeninnenvolumen projiziert wird.

## Revendications

1. Système d'éclairage, comprenant :
(a) un réservoir d'aquarium présentant une paroi périphérique (104) définissant un volume intérieur (106) ; une partie supérieure ouverte (108) en communication avec le volume intérieur ;
(b) un couvercle (52) recouvrant la partie supérieure ouverte du réservoir ; le couvercle étant fixé de manière pivotante au réservoir et pouvant pivoter entre une position couverte et une position non couverte ; le couvercle présentant une partie intérieure (114) en communication avec le volume intérieur, lorsque le couvercle est dans la position de couverte ;
(c) une source lumineuse (120) fixée à la partie intérieure du couvercle et se déplaçant avec le couvercle entre la position couverte et la position non couverte ; la source lumineuse émettant un faisceau lumineux ; et
(d) un agencement d'alignement (124) pour la source lumineuse construit et agencé pour garantir que le faisceau lumineux se projette dans le volume intérieur du réservoir indépendamment de la position du couvercle et de la source lumineuse, dans lequel l'agencement d'alignement comporte en outre l'un des éléments suivants :
un écran pouvant pivoté (130) fixé à la partie intérieure du couvercle et se déplaçant avec le couvercle entre la position couverte et la position non couverte ; l'écran pivotant par gravité vers une position déviant le faisceau lumineux vers l'intérieur du réservoir, lorsque le couvercle est déplacé vers la position non couverte ; ou
une paire de joints articulés (140, 142) entre le couvercle et la source lumineuse ; dans lequel les joints articulés permettent à la source lumineuse de pivoter sous l'effet de la gravité pour projeter le faisceau lumineux en continu dans le volume intérieur du réservoir, lorsque le couvercle est déplacé entre la position couverte et la position non couverte ; ou
un système de poulies (150) pour faire tourner la source lumineuse lorsque le couvercle est déplacé entre la position couverte et la position non couverte, et dans lequel :
(a) le couvercle est relié au réservoir le long d'un joint à charnière (113) ;
(b) le système de poulies comporte un système de poulies à courroie (152) présentant une première roue (154) reliée au joint à charnière, et une seconde roue (156) reliée à la source lumineuse, et une courroie (158) autour de chacune de la première roue et de la seconde roue ; dans lequel, lorsque le couvercle est déplacé le long du joint à charnière entre la position couverte et la position non couverte, la première roue tourne et translate le mouvement à la courroie, amenant la seconde roue à tourner et à faire tourner la source lumineuse.

2. Système selon la revendication 1, dans lequel l'agencement d'alignement comporte l'écran pivotant (130) fixé à la partie intérieure du couvercle et se déplaçant avec le couvercle entre la position couverte et la position non couverte, et dans lequel l'agencement d'alignement comporte une paire de joints pivotants (132, 134) s'étendant entre le couvercle et les extrémités opposées de l'écran.

3. Système selon la revendication 2, dans lequel la source lumineuse est une ampoule fluorescente fixée aux extrémités opposées.

4. Système selon la revendication 1, dans lequel l'agencement d'alignement comporte la paire de joints articulés (140, 142) entre le couvercle et la source lumineuse, et dans lequel la source lumineuse est une ampoule fluorescente fixée à des extrémités opposées aux joints articulés.

5. Système selon la revendication 1, dans lequel l'agencement d'alignement comporte le système de poulies (150) et dans lequel la source lumineuse est une ampoule fluorescente bien fixée au niveau de ses extrémités opposées au système de poulies.

6. Procédé permettant de fournir un éclairage à l'intérieur d'un aquarium par le système selon l'une quelconque des revendications 1 à 5 ; le procédé comprenant :
(a) le pivotement du couvercle d'une position recouvrant le réservoir à une position exposant la partie supérieure ouverte du réservoir ; et
(b) l'utilisation de l'agencement d'alignement pour la source lumineuse afin de garantir que le faisceau lumineux provenant de la source lumineuse se projette dans le volume intérieur du réservoir indépendamment de la position du couvercle et de la source lumineuse.
